# FASCICULE DE BREVET EUROPEEN

(11) **EP 2 763 939 B1**
(45) Date de publication et mention de la délivrance du brevet: **30.12.2015**
(21) Numéro de dépôt: 12775810.0
(22) Date de dépôt: 02.10.2012
(51) Int. Cl.: C03B 37/095, C03B 37/08

(54) **DISPOSITIF DELIVRANT DES FIBRES DE VERRE A TENEUR REDUITE EN METAUX PRECIEUX ET PROCÉDÉ DE FABRICATION DE CE DISPOSITIF**
VORRICHTUNG ZUR ABGABE VON GLASFASERN MIT REDUZIERTEM EDELMETALLGEHALT UND VERFAHREN ZUR ERSTELLUNG DIESER VORRICHTUNG
DEVICE DELIVERING GLASS FIBRES WITH A REDUCED PRECIOUS METAL CONTENT AND METHOD FOR PRODUCING SAID DEVICE

(30) Priorité: 06.10.2011 FR 1159017
(43) Date de publication de la demande: 13.08.2014
(73) Titulaire: Saint-Gobain Adfors, 73000 Chambéry (FR)
(72) Inventeur: CONDOLF, Cyril, 78700 Conflans-Sainte-Honorine (FR); BREUER, Achim, 52076 Aachen (DE)
(74) Mandataire: Douysset, Laurence
(86) Numéro de dépôt international: PCT/FR2012/052229
(87) Numéro de publication internationale: WO 2013/050696

(56) Documents cités:
- EP-A2- 2 000 442
- WO-A1-98/50313
- DE-B- 1 196 823
- US-A- 2 931 062

## Description

L'invention concerne une installation de fibrage délivrant des fibres et plus particulièrement un dispositif délivrant des filaments de matériau fondu, notamment de verre et le procédé de fabrication de ce dispositif.

De manière classique, une installation de fibrage comporte un bloc de prise de verre (flow block) qui reçoit du verre fondu issu d'un canal relié au four dans lequel s'effectue la fusion du verre, un bloc intermédiaire (bushing block) et un dispositif délivrant des filaments de matériau fondu : les filières (bushing) ou drains (drain bushing). La partie supérieure du dispositif peut comprendre une grille qui permet de répartir le débit du verre provenant du bloc intermédiaire et de chauffer le verre par effet Joule. Le chauffage du dispositif est réalisé à partir d'un transformateur électrique par connexion de deux terminaux situés chacun sur les extrémités opposées du dispositif, à des éléments de connexion électrique extérieurs au dispositif. Les terminaux sont rapportés par soudage contre les parois latérales de la filière et font saillie pour être raccordés aux éléments de connexion extérieurs qui se présentent sous la forme d'un mors en matériau électriquement conducteur. Le fond du dispositif est muni d'une plaque pourvue d'orifices, ou tétons, à travers lesquels s'écoule le verre fondu pour être étiré en une multiplicité de filaments.

Ces filaments dont le diamètre varie généralement de 5 à 33 µm sont rassemblés en au moins une nappe qui converge vers un dispositif d'assemblage pour former au moins une mèche et être par exemple bobinée. Selon sa destination, la mèche peut être aussi coupée (fils coupés) ou projetée sur un tapis (mats à fils continus). Les produits obtenus sont principalement utilisés dans diverses applications de renforcement.

Les filières ou drains sont soumis à un environnement corrosif imposé par le verre fondu et les températures élevées de leur fonctionnement. Ces dispositifs sont fabriqués classiquement en métaux précieux et le plus souvent en platine ou alliages de platine, comme par exemple, sans exhaustivité, en alliage PtRh, PtAu, ou Ptlr, matériaux électriquement conducteurs et résistants dans le temps à de très hautes températures. Toutefois, ces matériaux sont très onéreux et il apparaît souhaitable économiquement de limiter la quantité de métal précieux nécessaire dans les installations de fibrage. C'est dans ce cadre que s'inscrit la présente invention qui propose une solution permettant de réduire la quantité de métaux précieux dans les dispositifs tels que les filières ou les drains.

Le document US 2007/0178329 décrit un creuset en molybdène ou en tungstène comprenant un revêtement protecteur à base d'un alliage de tungstène et d'un métal choisi parmi l'iridium, le rhénium, l'osmium et le ruthénium. Toutefois, des métaux tels que le molybdène ou le tungstène ne peuvent pas être utilisés pour des dispositifs délivrant des fibres de verre, en raison de leur faible résistance à l'oxydation. Dans les procédés de fibrage, les parties externes des dispositifs sont exposées à l'air à des températures de l'ordre de 1100 à 1400°C et sont donc soumises à des phénomènes importants d'oxydation. D'autre part, des métaux comme le rhénium, l'osmium ou le ruthénium sont des métaux rares et chers et difficiles à mettre en oeuvre dans les applications souhaitées.

La demande de brevet WO 99/00336 décrit une assiette de fibrage percée dont les orifices sont recouverts d'alliage à base de cobalt et de chrome dans le but de limiter la corrosion. Le brevet US-5,417,735 propose de disposer en alternance des couches de chrome et de nickel sur les orifices des assiettes pour former un revêtement résistant à la corrosion. Selon ces documents, les revêtements sont directement déposés sur le substrat métallique. Or, pour des applications à haute température, des problèmes de diffusion sont rencontrés et conduisent à des structures poreuses cassantes au niveau de l'interface. De plus, un revêtement à base de chrome n'est pas souhaitable car ce métal risque à ces températures de se transformer en chrome hexavalent.

Johnson, dans la revue Glass, September 1972, page 372 « Platinum coating technique developed for glass industry » propose un procédé d'application d'un revêtement à base de platine résistant à la corrosion et déposé à la surface des orifices des assiettes de fibrage. Comme indiqués dans les documents WO 98/50313 et US-5,385,595, une zone de diffusion néfaste se forme alors à l'interface entre l'alliage métallique du substrat généralement à base de chrome, nickel et cobalt et la couche de platine. La formation de barrière de diffusion à base de borures, carbures ou nitrures est décrite. Le principal inconvénient de ces solutions réside dans le fait que les superalliages à base de cobalt ou de nickel utilisés pour les assiettes de fibrage fondent à des températures inférieures à 1400°C et par conséquent ne sont pas utilisables pour des dispositifs tels que des filières ou de drains. US 2 931062 divulgue une filière à base de fer comprenant des couches de céramiques et de platine.

La présente invention propose des dispositifs délivrant des filaments de verre fabriqués, au moins en partie, dans un matériau plus économique que les métaux précieux utilisés jusqu'à présent et qui possède une bonne résistance à l'oxydation, une bonne résistance à la corrosion au contact du verre fondu et une bonne mouillabilité par le verre. Le matériau doit également être un bon conducteur électrique et thermique, le chauffage des filières ou drains étant réalisé par effet Joule.

Selon l'invention, le dispositif délivrant des filaments de matériau fondu, notamment de verre, par chauffage par effet Joule au moyen d'une alimentation électrique, comportant des plaques latérales, une plaque de fond pourvue de tétons pour l'écoulement du matériau fondu et éventuellement une grille supérieure, est caractérisé en ce qu'au moins une de ces parties susceptible d'être en contact avec le matériau fondu est formée par
- une partie massive en alliage à base de fer présentant une température de fusion supérieure à 1450°C formant un substrat,
- une couche métallique de liaison formée sur au moins une partie de la surface du substrat,
- une couche céramique couvrant la couche métallique de liaison, la couche métallique et la couche céramique formant une barrière de diffusion aux composants de l'alliage formant le substrat, et
- une couche de revêtement protecteur en platine ou alliage de platine, déposée directement sur la couche céramique.

Selon l'invention, il est envisageable que le substrat en alliage de fer soit uniquement formé par les seules plaques latérales ou une partie de ces plaques. La grille supérieure, si elle est présente, peut également être en alliage de fer et ainsi constituer le substrat. La plaque de fond pourvue de tétons peut être fabriquée en alliage de fer et les tétons, permettant l'écoulement du matériau fondu, peuvent être en platine ou alliage de platine.

Il est également possible d'envisager que la plaque du fond et les tétons soient en platine ou alliage de platine. Dans ce cas, le substrat correspond aux plaques latérales et à la grille supérieure éventuellement présente.

De façon préférée, les couches métallique, céramique et de revêtement protecteur couvrent toutes les faces du substrat susceptibles de venir en contact avec le matériau fondu.

Les parties du dispositif susceptibles d'être en contact avec le matériau fondu doivent, si elles ne sont pas en alliage de fer, soit comprendre un revêtement en platine ou alliage de platine, soit être fabriquées en un métal précieux soit en tout autre alliage ou métal susceptible de résister à la corrosion au contact du matériau fondu si les températures des zones du dispositif concernées sont compatibles avec l'utilisation dudit alliage ou métal. Comme alliage ou métal de ce type, on pourra citer par exemple le palladium, les alliages de type FeCrNi, ou les superalliages à base de cobalt ou de nickel.
Les zones du dispositif qui sont à des températures supérieures à 1200°C sont avantageusement en alliage à base de fer recouvert des couches métalliques, céramique et de revêtement protecteur.

De façon préférée, le substrat est en alliage FeCrAl. Les métaux fer, chrome et aluminium sont les constituants majoritaires de ces alliages,

L'alliage FeCrAl peut comprendre, en pourcentages poids, entre 15 et 25% de chrome, entre 4,5 et 6,5% d'aluminium, et éventuellement au moins un élément choisi parmi le carbone, le nickel, le silicium, le manganèse, le titane, le tungstène, l'yttrium, le tantale, le zirconium, le lanthane, le cérium, l'hafnium, préférentiellement à des teneurs d'au plus 1%poids de chacun de ces éléments, le reste étant du fer.

L'alliage FeCrAL peut également comprendre, en outre, entre 2 et 4 % poids de molybdène.

La couche barrière de diffusion comprend au moins deux couches, une première couche étant une couche de liaison métallique, la seconde couche étant une couche céramique. De préférence, la couche céramique est en zircone stabilisée avec de l'oxyde d'yttrium et/ou de magnésium.
La teneur en oxyde d'yttrium dans la zircone est comprise entre 5 et 30 % poids, de préférence entre 8 et 20% poids.
La teneur en oxyde de magnésium dans la zircone est comprise entre 4 et 30% poids, de préférence entre 6 et 22% poids.

La couche métallique de liaison est en alliage de FeCrAl et a une épaisseur comprise entre 100 et 300 µm.

La couche céramique déposée sur le revêtement de liaison métallique a une épaisseur comprise entre 200 et 400 µm.

Selon l'invention, la couche de platine ou d'alliage de platine a une épaisseur comprise entre 200 et 500µm, de préférence entre 250 et 350µm.

Selon un mode de réalisation, les plaques latérales et la grille supérieure éventuellement présente sont en alliage de fer et recouvertes des couches métallique, céramique et de revêtement protecteur, la plaque en fond comprenant les tétons étant en platine ou alliage de platine.

Selon un autre mode de réalisation, les plaques latérales, la grille supérieure éventuellement présente et la plaque en fond sont en alliage de fer et recouvertes des couches métallique, céramique et de revêtement protecteur, les tétons étant en platine ou alliage de platine.

L'invention porte également sur un procédé de fabrication d'un dispositif délivrant des filaments de matériau fondu, notamment de verre dans lequel les couches constituant la couche de barrière de diffusion sont déposées par une technique choisie parmi la pulvérisation à la flamme à haute vitesse, projection plasma sous vide ou projection plasma atmosphérique.

Avantageusement, un traitement thermique sous air est réalisé à une température comprise entre 900 et 1000°C, pendant une durée de 2 à 5 heures après dépôt de la couche métallique de liaison, préalablement au dépôt de la couche céramique.

Pour fabriquer le dispositif selon l'invention, les parties qui ne sont pas fabriquées en alliage de fer sont soudées à l'alliage à base de fer par soudage à l'arc avec électrode non fusible, soudage au laser, soudage par faisceau d'électrons ou soudage par diffusion.

L'invention va à présent être décrite de façon plus détaillée, en regard des dessins annexés dans lesquels :
- la figure 1 illustre schématiquement une vue en coupe d'un dispositif délivrant des filaments de matériau fondu selon la présente invention ;
- la figure 2 représente une observation microscopique du revêtement protecteur ayant été exposé sous air à 1300°C pendant une durée de 100 heures, afin de simuler les conditions de marche des filières.

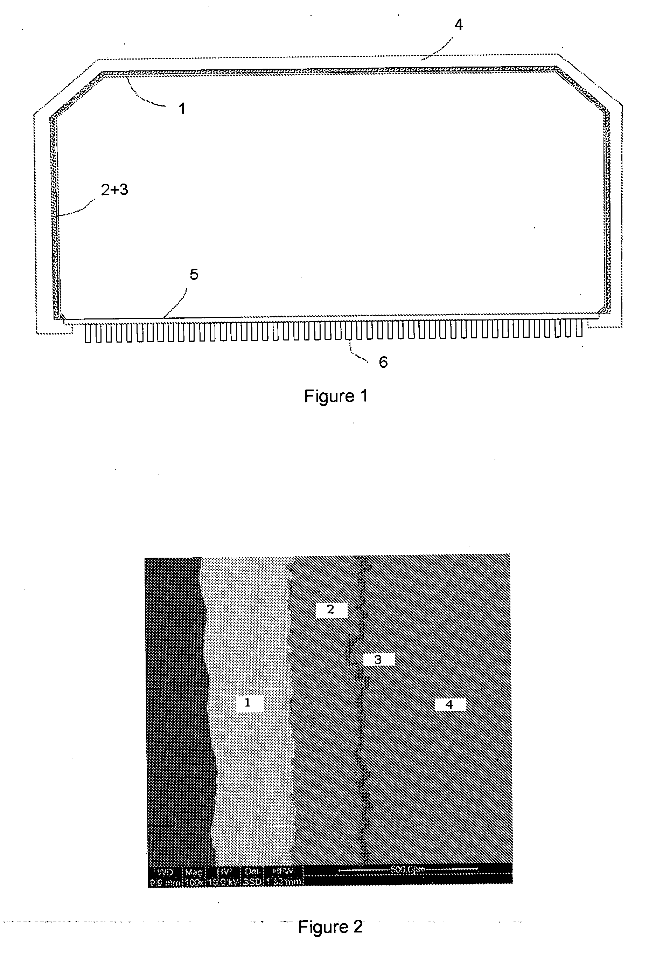

La figure 1 est une vue en coupe du dispositif délivrant des filaments de verre fondu qui comporte de façon classique une plaque de fond 5 pourvue d'une multitude d'orifices percés dans des tétons 6, permettant l'écoulement et l'étirement du matériau fondu en une multiplicité de filaments, une grille supérieure et des plaques latérales.

Selon l'invention, au moins une partie du dispositif est en alliage de fer. Pour résister aux températures élevées, il est nécessaire que cet alliage ait une température de fusion supérieure aux températures de fonctionnement du dispositif soit supérieure à 1450°C. Le chauffage du dispositif est réalisé par effet Joule à partir d'un transformateur électrique par la connexion de deux terminaux, situés chacun sur les extrémités opposées du dispositif, à des éléments de connexion électriques extérieurs. Ce type de chauffage peut provoquer l'existence de points chauds où la température locale peut avoisiner 1400°C.

Les alliages utilisés comme matériau constitutif du substrat sont des alliages de fer, et notamment des alliages FeCrAl. Ces trois éléments sont les éléments majoritaires ; d'autres éléments de la classification périodique, comme par exemple le carbone, le nickel, le silicium, le manganèse, le molybdène, le titane, le tungstène, l'yttrium, le tantale, le zirconium, le lanthane, le cérium, l'hafnium peuvent également être présents dans l'alliage, en tant que constituants minoritaires.

Par exemple, l'alliage à base de fer comprend, en pourcentage poids, entre 20,5 et 23,5% de chrome, 5,8 % d'aluminium, au plus 0,7% de silicium, au plus 0,4% de manganèse, au plus 0,08% de carbone, le reste étant du fer.

On peut citer par exemple un alliage dont la composition est la suivante : 22% de chrome, 5,8% d'aluminium, au plus 0,7% de silicium, au plus 0.4% de manganèse, au plus 0.08% de carbone, le reste étant du fer. Cet alliage est connu sous le nom de Kanthal APM^{®}. Sa température de fusion est de 1500°C et il possède une bonne stabilité de forme à haute température.

Il peut également comprendre, en pourcentage poids, entre 20,5 et 23,5% de chrome, 5% d'aluminium, 3% de molybdène, au plus 0,7% de silicium, au plus 0.4% de manganèse, au plus 0,08% de carbone, le reste étant du fer.

De façon très préférée la composition de l'alliage utilisé est la suivante : 21% de chrome, 5 % d'aluminium, 3 % de molybdène, au plus 0,7% de silicium, au plus 0,4% de manganèse, au plus 0,08% de carbone, le reste étant du fer. Cet alliage est connu sous le nom de Kanthal APMT^{®}. Sa température de fusion est de 1500°C et il possède également une bonne stabilité de forme à haute température, sa résistance mécanique étant renforcée par la présence de molybdène.

D'autres alliages de type Kanthal A-1^{®} ou Kanthal AF^{®} peuvent également être utilisés comme matériau constitutif du substrat.

Des alliages à durcissement par oxydes dispersés, encore appelés alliages ODS peuvent être utilisés. On citera par exemple :
- l'alliage MA 956 comprenant 20% de chrome et 4,5% d'aluminium, 0,3% de titane, 0,04% de carbone et 0,5% d'oxyde d'yttrium, le reste étant du fer,
- l'alliage PM 2000 comprenant 20% de chrome et environ 55% d'aluminium, 0,3% de titane, 0,01% de carbone et de l'oxyde d'yttrium, le reste étant du fer ou
- l'alliage ODM 751 comprenant 16% de chrome et environ 4,5% d'aluminium, 0,6% de titane, 0,01% de carbone, 1% de molybdène et de l'oxyde d'yttrium, le reste étant du fer.

Dans le mode de réalisation représenté sur la figure 1, l'ensemble du corps du dispositif constitué par la grille supérieure et les plaques latérales sont en alliage de fer (4) et constitue le substrat, la plaque en fond comprenant les tétons étant en platine ou en alliage de platine.

Certaines parties du dispositif qui ne sont pas en contact avec le matériau fondu peuvent éventuellement rester sous la forme de substrat brut, en alliage de fer, sans nécessiter de couche barrière de diffusion, ni de revêtement protecteur.

Entre le substrat et le revêtement protecteur, la couche barrière de diffusion est déposée. Cette couche barrière est nécessaire pour éviter la formation d'une zone de diffusion qui risquerait de se former à l'interface entre le substrat et le revêtement protecteur. Elle comprend au moins deux couches de nature différente. La première couche (3) directement déposée sur le substrat (4) est une couche métallique, appelée couche métallique de liaison. La couche métallique de liaison a une composition sensiblement identique à celle du substrat. Les constituants de cette couche sont donc sensiblement les mêmes que ceux du substrat. Ainsi les températures de fusion de la couche métallique de liaison et du substrat sont voisines et leurs coefficients de dilatation thermique sont du même ordre de grandeur. Toutefois, en raison des techniques de dépôt utilisées pour déposer la couche métallique de liaison et détaillées ci-après, leurs microstructures peuvent être différentes. La composition de la couche métallique de liaison comprend, en pourcentage poids, entre 15 et 25% de chrome, entre 4,5 et 6,5% d'aluminium, éventuellement entre 2 et 4% de molybdène et éventuellement au moins un élément choisi parmi le carbone, le nickel, le silicium, le manganèse, le titane, le tungstène, l'yttrium, le tantale, le zirconium, le lanthane, le cérium, l'hafnium, préférentiellement à des teneurs d'au plus 1 %poids de chacun de ces éléments, le reste étant du fer.

A titre d'exemple, la couche métallique de liaison a la composition suivante: 20,5% de chrome, 6,4 % d'aluminium, 0,75% de silicium, 0,11% de manganèse, le reste étant du fer.

La couche métallique de liaison est déposée sur le substrat par une méthode de pulvérisation. On peut citer par exemple les techniques de pulvérisation à la flamme à haute vitesse (en anglais « High Velocity oxygen Fuel » ou HVOF), projection plasma sous vide (en anglais « Vacuum Plasma Spraying » ou VPS) ou projection plasma atmosphérique (en anglais « Atmospheric Plasma Spraying » ou APS).

Ces techniques permettent d'obtenir des épaisseurs de couche comprises entre 100 et 300 µm. Des dépôts successifs peuvent être envisagés si on souhaite obtenir des épaisseurs plus importantes.

Il est envisageable de faire varier la composition de cette couche métallique de liaison, tout en conservant la compatibilité avec l'alliage constitutif du substrat et de réaliser un empilement comprenant plusieurs couches métalliques successives de compositions légèrement différentes.

La seconde couche (2) constituant la couche barrière de diffusion est une couche céramique. De façon préférée, la céramique utilisée est de la zircone ZrO₂, stabilisée par de l'oxyde d'yttrium Y₂O₃ et/ou de l'oxyde de magnésium MgO.

Les teneurs en Y₂O₃ ou MgO introduites dans la zircone varient respectivement entre 5 et 30% poids, de préférence 8 et 20% poids et 4 et 30%poids, de préférence entre 6 et 22% poids.

La couche céramique a une épaisseur comprise entre 200 et 400 µm. Elle est déposée par des techniques identiques à celles utilisées pour le dépôt de la couche métallique de liaison, à savoir la pulvérisation à la flamme à haute vitesse, projection plasma sous vide ou projection plasma atmosphérique.

La couche métallique de liaison permet d'assurer une bonne adhérence de la couche céramique.

La céramique utilisée est choisie en fonction de son coefficient d'expansion thermique. La zircone stabilisée présente l'avantage d'avoir des coefficients d'expansion thermique relative compatibles avec la dilatation de la couche métallique de liaison. Ces coefficients sont respectivement de 10.10⁻⁶ K⁻¹ et 5 à 10.10⁻⁶ K⁻¹ pour une zircone stabilisée à l'oxyde de magnésium et à l'oxyde d'yttrium, comparé à 11.10⁻⁶ K⁻¹ pour la couche métallique de liaison décrite ci-dessus dont la composition comprend 20,5% de chrome, 6,4 % d'aluminium, 0,75% de silicium, 0,11% de manganèse, le reste étant du fer.

Sur la couche barrière de diffusion, une couche de revêtement protecteur en platine ou alliage de platine est déposée. Cette couche assure la protection du dispositif vis-à-vis de la corrosion provoquée par le contact avec le verre fondu.

Ce revêtement est déposé par pulvérisation thermique. Ce type de technologie est par exemple développé par Johnson Matthey et connue sous le nom d'ACT^{®} technology, qui permet d'obtenir un revêtement en platine ou en alliage platine-rhodium d'une épaisseur comprise entre 200 et 500 µm.

Une fois recouverte du revêtement protecteur à base de platine, la couche céramique présente l'avantage de rester inerte vis-à-vis de la couche de revêtement protecteur en platine à haute température. Il est possible de séparer facilement le revêtement protecteur à base de platine de la couche barrière de diffusion puisqu'il n'existe pas d'interactions chimiques entre ces deux couches. La couche de platine ainsi séparée peut aisément être recyclée.

Le dispositif selon l'invention peut être fabriqué par une succession de dépôts de couches de composition différente.

La surface du substrat doit être nettoyée par toute technique de préparation de surface connue de l'homme du métier. On peut par exemple réaliser un nettoyage à l'alcool ou à l'acétone puis sablée avec du corindon, préalablement au dépôt par pulvérisation thermique de la couche de revêtement de liaison métallique. Ce nettoyage permet de créer des rugosités de surface et d'améliorer l'adhésion de la couche pulvérisée.

Une fois la couche métallique de liaison déposée, il est possible de réaliser un traitement thermique sous air de l'empilement, substrat-couche métallique de liaison. Ce traitement est effectué à une température comprise entre 900 et 1000°C, pendant une durée de 2 à 5 heures et permet de développer une couche d'oxyde d'aluminium à la surface de la couche métallique de liaison. Cette couche d'alumine améliore la tenue à l'oxydation aux hautes températures. Ainsi les parties du dispositif en contact de l'atmosphère restent stables, contrairement à ce qui pourrait se passer avec des métaux réfractaires comme le molybdène ou le tungstène.

Les parties du dispositif qui ne sont pas fabriquées en alliages à base de fer peuvent être avantageusement soudées au reste du dispositif.

Les techniques de soudage envisageables sont le soudage à l'arc avec électrode non fusible (en anglais Tungsten Inert Gas ou TIG), le soudage au laser, le soudage par faisceau d'électrons ou le soudage par diffusion.

Il est ainsi possible, si nécessaire, de détacher ces parties et de les recycler.

La figure 2 représente une photo obtenue à partie d'une observation microscopique du substrat (4) revêtu de la couche protectrice (1) et des couches barrière de diffusion. La couche de céramique (2) est une couche de ZrO₂-8% Y₂O₃. La couche métallique de liaison (3) est légèrement oxydée à la surface puisqu'une fine couche d'alumine a été formée et apparait en foncé sur la photo. Les compositions de la couche métallique de liaison et du substrat étant sensiblement identiques la distinction entre ces deux couches est difficilement visible sur la figure 2.

## Revendications

1. Dispositif délivrant des filaments de matériau fondu, notamment de verre, par chauffage par effet Joule au moyen d'une alimentation électrique, comportant des plaques latérales, une plaque de fond pourvue de tétons pour l'écoulement du matériau fondu et éventuellement une grille supérieure, **caractérisé en ce qu'**au moins une de ces parties susceptible d'être en contact avec le matériau fondu est formée par :
- une partie massive en alliage à base de fer présentant une température de fusion supérieure à 1450°C formant un substrat,
- une couche métallique de liaison formée sur au moins une partie de la surface du substrat,
- une couche céramique couvrant la couche métallique de liaison, la couche métallique et la couche céramique formant une barrière de diffusion aux composants de l'alliage formant le substrat, et
- une couche de revêtement protecteur en platine ou alliage de platine, déposée directement sur la couche céramique.

2. Dispositif selon la revendication 1 **caractérisé en ce que** les couches métallique, céramique et de revêtement protecteur couvrent toutes les faces du substrat susceptibles de venir en contact avec le matériau fondu.

3. Dispositif selon l'une des revendications 1 ou 2 **caractérisé en ce que** le substrat est en alliage FeCrAl.

4. Dispositif selon l'une des revendications 1 à 3 **caractérisé en ce que** l'alliage FeCrAl comprend, en pourcentages poids, entre 15 et 25% de chrome, entre 4,5 et 6,5% d'aluminium, et éventuellement au moins un élément choisi parmi le carbone, le nickel, le silicium, le manganèse, Le titane, Le tungstène, l'yttrium, le tantale, le zirconium, le lanthane, le cérium, l'hafnium, de préférence à des teneurs d'au plus 1% poids de chacun de ces éléments, le reste étant du fer.

5. Dispositif selon la revendication 4 **caractérisé en ce que** l'alliage FeCrAl comprend, en outre entre 2 et 4% poids de molybdène.

6. Dispositif selon l'une des revendications précédentes **caractérisé en ce que** la couche céramique est en zircone stabilisée avec de l'oxyde d'yttrium et/ou avec de l'oxyde de magnésium.

7. Dispositif selon la revendication 6 **caractérisé en ce que** la teneur en oxyde d'yttrium dans la zircone est comprise entre 5 et 30 % poids, de préférence entre 8 et 20% poids.

8. Dispositif selon la revendication 6 dans lequel la teneur en oxyde de magnésium dans la zircone est comprise entre 4 et 30% poids, de préférence entre 6 et 22% poids.

9. Dispositif selon l'une des revendications 1 à 8 **caractérisé en ce que** la couche métallique de liaison est un alliage FeCrAl.

10. Dispositif selon l'une des revendications 1 à 9 **caractérisé en ce que** la couche métallique de liaison a une épaisseur comprise entre 100 et 300 µm.

11. Dispositif selon l'une des revendications 1 à 10 **caractérisé en ce que** la couche céramique a une épaisseur comprise entre 200 et 400 µm.

12. Dispositif selon l'une des revendications 1 à 11 **caractérisé en ce que** la couche de platine ou d'alliage de platine a une épaisseur comprise entre 200 et 500µm.

13. Dispositif selon l'une des revendications 1 à 12 **caractérisé en ce que** les plaques latérales et la grille supérieure éventuellement présente sont en alliage de fer et recouvertes des couches métallique, céramique et de revêtement protecteur, la plaque en fond comprenant les tétons étant en platine ou alliage de platine.

14. Dispositif selon l'une des revendications 1 à 12 **caractérisé en ce que** les plaques latérales, la grille supérieure éventuellement présente et la plaque en fond sont en alliage de fer et recouvertes des couches métallique, céramique et de revêtement protecteur, les tétons étant en platine ou alliage de platine.

15. Procédé de fabrication d'un dispositif délivrant des filaments de matériau fondu, notamment de verre selon l'une des revendications 1 à 14 dans lequel les couches constituant la couche de barrière de diffusion sont déposées sur le substrat par une technique choisie parmi la pulvérisation à la flamme à haute vitesse, la projection plasma sous vide ou la projection plasma atmosphérique.

16. Procédé selon la revendication 15 dans lequel un traitement thermique sous air est réalisé à une température comprise entre 900 et 1000°C, pendant une durée de 2 à 5 heures après dépôt de la couche métallique de liaison, préalablement au dépôt de la couche céramique.

17. Procédé selon l'une des revendications 15 à 16 dans lequel les parties du dispositif qui ne sont pas fabriquées en alliages de fer sont soudées au substrat par soudage à l'arc avec électrode non fusible, soudage au laser, soudage par faisceau d'électrons ou soudage par diffusion.

## Patentansprüche

1. Vorrichtung zur Lieferung von Filamenten aus einer Materialschmelze, insbesondere aus Glas, das durch Aufheizen gemäß Joule-Effekt mittels einer elektrischen Quelle geschmolzen wird, wobei die Vorrichtung seitliche Platten, eine Bodenplatte, die mit Zapfen für das Fließen des geschmolzenen Materials versehen ist, und gegebenenfalls ein oberes Gitter aufweist, **dadurch gekennzeichnet, dass** mindestens eines dieser Teile, das mit dem geschmolzenen Material in Kontakt kommen kann, gebildet ist von:
- einem massiven Teil aus Legierung auf Eisenbasis mit einer Schmelztemperatur, die größer als 1.450 °C ist, die ein Substrat bildet,
- einer metallischen Verbindungsschicht, die auf mindestens einem Teil der Oberfläche des Substrats gebildet ist,
- einer keramischen Schicht, welche die metallische Verbindungsschicht bedeckt, wobei die metallische Schicht und die keramische Schicht eine Diffusionssperre für die Bestandteile der Legierung, die das Substrat bildet, bilden und
- einer Schutzüberzugsschicht aus Platin oder Platinlegierung, die direkt auf die keramische Schicht aufgebracht ist.

2. Vorrichtung nach Anspruch 1, **dadurch gekennzeichnet, dass** die metallische Schicht, die keramische Schicht und die Schutzüberzugsschicht sämtliche Oberflächen des Substrats bedecken, die mit dem geschmolzenen Material in Kontakt kommen können.

3. Vorrichtung nach einem der Ansprüche 1 oder 2, **dadurch gekennzeichnet, dass** das Substrat aus FeCrAl-Legierung ist.

4. Vorrichtung nach einem der Ansprüche 1 bis 3, **dadurch gekennzeichnet, dass** die FeCrAI-Legierung zwischen 15 und 25 Gew.% Chrom, zwischen 4,5 und 6,5 Gew.-% Aluminium und gegebenenfalls mindestens ein Element enthält, das ausgewählt ist aus Kohlenstoff, Nickel, Silizium, Mangan, Titan, Wolfgram, Yttrium, Tantal, Zirkonium, Lanthan, Cerium, Hafnium, vorzugsweise in Gehalten von höchstens 1 Gew.-% jedes dieser Elemente, wobei der Rest Eisen ist.

5. Vorrichtung nach Anspruch 4, **dadurch gekennzeichnet, dass** die FeCrAl-Legierung ferner zwischen 2 und 4 Gew.-% Molybdän enthält.

6. Vorrichtung nach einem der vorhergehenden Ansprüche, **dadurch gekennzeichnet, dass** die keramische Schicht aus Zirkon ist, das mit Yttriumoxid und/oder mit Magnesiumoxid stabilisiert wurde.

7. Vorrichtung nach Anspruch 6, **dadurch gekennzeichnet, dass** der Gehalt an Yttriumoxid in dem Zirkon zwischen 5 und 30 Gew.-%, vorzugsweise zwischen 8 und 20 Gew.-% beträgt.

8. Vorrichtung nach Anspruch 6, wobei der Gehalt an Magnesiumoxid in dem Zirkon zwischen 4 und 30 Gew.-%, vorzugsweise zwischen 6 und 22 Gew.-% beträgt.

9. Vorrichtung nach einem der Ansprüche 1 bis 8, **dadurch gekennzeichnet, dass** die metallische Verbindungsschicht eine FeCrAl-Legierung ist.

10. Vorrichtung nach einem der Ansprüche 1 bis 9, **dadurch gekennzeichnet, dass** die metallische Verbindungsschicht eine Dicke hat, die zwischen 100 und 300 µm beträgt.

11. Vorrichtung nach einem der Ansprüche 1 bis 10, **dadurch gekennzeichnet, dass** die keramische Schicht eine Dicke hat, die zwischen 200 und 400 µm beträgt.

12. Vorrichtung nach einem der Ansprüche 1 bis 11, **dadurch gekennzeichnet, dass** die Schicht aus Platin oder Platinlegierung eine Dicke hat, die zwischen 200 und 500 µm beträgt.

13. Vorrichtung nach einem der Ansprüche 1 bis 12, **dadurch gekennzeichnet, dass** die seitlichen Platten und das gegebenenfalls vorhandene obere Gitter aus Eisenlegierung sind und mit der metallischen Schicht, der keramischen Schicht und der Schutzüberzugsschicht bedeckt sind, wobei die Bodenplatte die Zapfen aufweist, die aus Platin oder Platinlegierung sind.

14. Vorrichtung nach einem der Ansprüche 1 bis 12, **dadurch gekennzeichnet, dass** die seitlichen Platten, das gegebenenfalls vorhandene obere Gitter und die Bodenplatte aus Eisenlegierung sind und mit der metallischen Schicht, der keramischen Schicht und der Schutzüberzugsschicht bedeckt sind, wobei die Zapfen aus Platin oder Platinlegierung sind.

15. Verfahren zum Herstellen einer Vorrichtung zur Lieferung von Filamenten aus geschmolzenem Material, insbesondere aus Glas, nach einem der Ansprüche 1 bis 14, wobei die Schichten, welche die Diffusionssperrschicht bilden, auf dem Substrat durch eine Technik aufgetragen werden, die ausgewählt ist aus dem Hochgeschwindigkeits-Flammspritzen, dem Vakuumplasmaspritzen oder dem atmosphärischen Plasmaspritzen.

16. Verfahren nach Anspruch 15, wobei eine Wärmebehandlung unter Luft bei einer Temperatur, die zwischen 900 und 1.000 °C beträgt, über eine Dauer von 2 bis 5 Stunden nach Auftragen der metallischen Verbindungsschicht, vor dem Auftragen der keramischen Schicht, durchgeführt wird.

17. Verfahren nach einem der Ansprüche 15 bis 16, wobei die Teile der Vorrichtung, die nicht in Eisenlegierungen hergestellt wurden, mit dem Substrat durch Lichtbogenschweißen mit nicht abschmelzender Elektrode, Laserschweißen, Elektronenstrahlschweißen oder Diffusionsschweißen verschweißt werden.

## Claims

1. A device delivering filaments of molten material, especially glass, by Joule heating using a power supply, comprising side plates, a bottom plate provided with nozzles for the flow of the molten material and optionally an upper screen, **characterized in that** at least one of these parts capable of being in contact with the molten material is formed by:
- a solid part made of iron-based alloy having a melting point above 1450°C that forms a substrate,
- a metal tie layer formed on at least one portion of the surface of the substrate,
- a ceramic layer covering the metal tie layer, the metal layer and the ceramic layer forming a diffusion barrier to the components of the alloy that forms the substrate, and
- a protective coating layer made of platinum or platinum alloy, deposited directly on the ceramic layer.

2. The device as claimed in claim 1, **characterized in that** the metal, ceramic and protective coating layers cover all the faces of the substrate capable of coming into contact with the molten material.

3. The device as claimed in either of claims 1 and 2, **characterized in that** the substrate is made of FeCrAl alloy.

4. The device as claimed in one of claims 1 to 3, **characterized in that** the FeCrAl alloy comprises, in percentages by weight, between 15% and 25% of chromium, between 4.5% and 6.5% of aluminum, and optionally at least one element selected from carbon, nickel, silicon, manganese, titanium, tungsten, yttrium, tantalum, zirconium, lanthanum, cerium and hafnium, preferably at contents of at most 1% by weight of each of these elements, the remainder being iron.

5. The device as claimed in claim 4, **characterized in that** the FeCrAl alloy comprises, in addition, between 2% and 4% by weight of molybdenum.

6. The device as claimed in one of the preceding claims, **characterized in that** the ceramic layer is made of zirconia stabilized with yttrium oxide and/or with magnesium oxide.

7. The device as claimed in claim 6, **characterized in that** the content of yttrium oxide in the zirconia is between 5% and 30% by weight, preferably between 8% and 20% by weight.

8. The device as claimed in claim 6, wherein the content of magnesium oxide in the zirconia is between 4% and 30% by weight, preferably between 6% and 22% by weight.

9. The device as claimed in one of claims 1 to 8, **characterized in that** the metal tie layer is an FeCrAl alloy.

10. The device as claimed in one of claims 1 to 9, **characterized in that** the metal tie layer has a thickness between 100 and 300 µm.

11. The device as claimed in one of claims 1 to 10, **characterized in that** the ceramic layer has a thickness between 200 and 400 µm.

12. The device as claimed in one of claims 1 to 11, **characterized in that** the layer of platinum or platinum alloy has a thickness between 200 and 500 µm.

13. The device as claimed in one of claims 1 to 12, **characterized in that** the side plates and the upper screen optionally present are made of iron alloy and are covered with metal, ceramic and protective coating layers, the bottom plate comprising the nozzles being made of platinum or platinum alloy.

14. The device as claimed in one of claims 1 to 12, **characterized in that** the side plates, the upper screen optionally present and the bottom plate are made of iron alloy and are covered with metal, ceramic and protective coating layers, the nozzles being made of platinum or platinum alloy.

15. A process for manufacturing a device delivering filaments of molten material, especially glass, as claimed in one of claims 1 to 14, wherein the layers forming the diffusion barrier layer are deposited on the substrate by a technique selected from high velocity oxygen fuel spraying, vacuum plasma spraying or atmospheric plasma spraying.

16. The process as claimed in claim 15, wherein a heat treatment in air is carried out at a temperature between 900°C and 1000°C, for a duration of 2 to 5 hours after deposition of the metal tie layer, prior to the deposition of the ceramic layer.

17. The process as claimed in either of claims 15 and 16, wherein the parts of the device which are not manufactured from iron alloys are welded to the substrate by arc welding with a non-consumable electrode, laser welding, electron beam welding or diffusion welding.
